# EUROPÄISCHE PATENTSCHRIFT

(11) **EP 2 330 866 B1**
(45) Veröffentlichungstag und Bekanntmachung des Hinweises auf die Patenterteilung: **02.11.2016**
(21) Anmeldenummer: 10191835.7
(22) Anmeldetag: 19.11.2010
(51) Int. Cl.: H05B 6/06

(54) **Verfahren und Induktionsheizeinrichtung zum Ermitteln einer Temperatur eines mittels einer Induktionsheizspule erwärmten Kochgefäßbodens**
Method and induction heating device for determining a temperature of the base of a cooking vessel heated using an induction heating coil
Procédé et dispositif de chauffage à induction destiné à établir une température d'un fond de récipient de cuisine chauffé à l'aide d'une bobine de chauffage à induction

(30) Priorität: 26.11.2009 DE 102009047185
(43) Veröffentlichungstag der Anmeldung: 08.06.2011
(73) Patentinhaber: E.G.O. Elektro-Gerätebau GmbH, 75038 Oberderdingen (DE)
(72) Erfinder: Schilling, Wilfried, 76703, Kraichtal (DE); Schönherr, Tobias, 76703, Kraichtal (DE); Kappes, Werner, 69437, Neckargerach (DE); Volk, Martin, 76530, Baden-Baden (DE)
(74) Vertreter: Patentanwälte Ruff, Wilhelm, Beier, Dauster & Partner mbB

(56) Entgegenhaltungen:
- EP-A2- 0 619 692
- EP-A2- 1 420 613
- WO-A2-97/16943
- DE-A1-102004 033 115

## Beschreibung

Die Erfindung betrifft ein Verfahren und eine Induktionsheizeinrichtung zum Ermitteln einer Temperatur eines mittels einer Induktionsheizspule erwärmten Kochgefäßbodens.

Bei Induktionsheizeinrichtungen wird mittels einer Induktionsheizspule ein magnetisches Wechselfeld erzeugt, welches in einem zu beheizenden Kochgefäß mit einem Boden aus ferromagnetischem Material Wirbelströme induziert und Ummagnetisierungsverluste bewirkt, wodurch das Kochgefäß erhitzt wird.

Die Induktionsheizspule ist Bestandteil eines Schwingkreises, der die Induktionsheizspule und einen oder mehrere Kondensatoren umfasst. Die Induktionsheizspule ist üblicherweise als flächige, spiralförmig gewickelte Spule mit zugehörigen Ferrit-Kernen ausgeführt und beispielsweise unter einer Glaskeramikoberfläche eines Induktionskochfelds angeordnet. Die Induktionsheizspule bildet hierbei in Verbindung mit dem zu beheizenden Kochgeschirr einen induktiven und einen resistiven Teil des Schwingkreises.

Zur Ansteuerung bzw. Anregung des Schwingkreises wird zunächst eine niederfrequente Netzwechselspannung mit einer Netzfrequenz von beispielsweise 50Hz bzw. 60Hz gleichgerichtet und anschließend mittels Halbleiterschaltern in ein Anregungs- bzw. Ansteuersignal höherer Frequenz umgesetzt. Das Anregungssignal bzw. die Ansteuerspannung ist üblicherweise eine Rechteckspannung mit einer Frequenz in einem Bereich von 20kHz bis 50kHz. Eine Schaltung zur Erzeugung des Anregungssignals wird auch als (Frequenz-)Umrichter bezeichnet.

Zum Einstellen einer Heizleistungsabgabe der Induktionsheizeinrichtung sind unterschiedliche Verfahren bekannt.

Bei einem ersten Verfahren wird eine Frequenz des Anregungssignals bzw. der rechteckförmigen Spannung in Abhängigkeit von der abzugebenden Heizleistung bzw. vom gewünschten Leistungsumsatz verändert. Dieses Verfahren zur Einstellung der Heizleistungsabgabe macht von der Tatsache Gebrauch, dass bei einer Anregung des Schwingkreises mit dessen Resonanzfrequenz eine maximale Heizleistungsabgabe erfolgt. Je größer die Differenz zwischen der Frequenz des Anregungssignals und der Resonanzfrequenz des Schwingkreises wird, desto kleiner wird die abgegebene Heizleistung.

Wenn die Induktionsheizeinrichtung jedoch mehrere Schwingkreise aufweist, beispielsweise, wenn die Induktionsheizeinrichtung ein Induktionskochfeld mit unterschiedlichen Induktionskochstellen bildet, und unterschiedliche Heizleistungen für die Schwingkreise eingestellt sind, können durch Überlagerung der unterschiedlichen Frequenzen der Anregungssignale Schwebungen verursacht werden, die zu störenden Geräuschen führen können.

Ein Verfahren zur Heizleistungseinstellung, welches Störgeräusche aufgrund derartiger Schwebungen vermeidet, ist eine Pulsweitenmodulation des Anregungssignals bei konstanter Erregerfrequenz, bei dem ein Effektivwert einer Heizleistung mittels Veränderung der Pulsbreite des Anregungssignals eingestellt wird. Bei einer derartigen Effektivwertsteuerung durch Veränderung der Pulsbreite bei konstanter Erregerfrequenz entstehen jedoch hohe Ein- und Ausschaltströme in den Halbleiterschaltern, wodurch ein breitbandiges und energiereiches Störspektrum verursacht wird.

Häufig ist es wünschenswert, eine Temperatur eines derart induktiv erwärmten Kochgefäßbodens zu bestimmen, um beispielsweise spezifische zeitliche Erwärmungsprofile erzeugen zu können.

Die WO 1997/016943 offenbart ein Verfahren, bei dem temperaturabhängige Änderungen ferromagnetischer Eigenschaften des Kochgefäßbodens gemessen und zur Bestimmung der Temperatur des Kochgefäßbodens ausgewertet werden.

Die DE 10 2004 033 115 A1 zeigt ein Verfahren und eine Vorrichtung zur Messung und Regelung der Temperatur eines ferromagnetischen Bodens eines Kochgeschirrs, wobei zur Messung eine Kochleistung kurzzeitig abgeschaltet und während der Schaltpause die Eigenfrequenz eines Schwingkreises gemessen wird.

Der Erfindung liegt die Aufgabe zugrunde, ein Verfahren und eine Induktionsheizeinrichtung zum Ermitteln einer Temperatur eines mittels einer Induktionsheizspule erwärmten Kochgefäßbodens zur Verfügung zu stellen, die eine zuverlässige und störsicher Temperaturermittlung ermöglichen.

Die Erfindung löst diese Aufgabe durch ein Verfahren mit den Merkmalen des Anspruchs 1 und eine Induktionsheizeinrichtung mit den Merkmalen des Anspruchs 11.

Das Verfahren dient zum Ermitteln einer Temperatur eines mittels einer Induktionsheizspule erwärmten Kochgefäßbodens. Es umfasst die Schritte: Erzeugen einer Zwischenkreisspannung zumindest zeitweise in Abhängigkeit von einer einphasigen oder mehrphasigen, insbesondere dreiphasigen, Netzwechselspannung, Erzeugen einer hochfrequenten Ansteuerspannung (oder Ansteuerstroms) aus der Zwischenkreisspannung, beispielsweise mit einer Frequenz in einem Bereich von 20kHz bis 50kHz, und Beaufschlagen eines Schwingkreises umfassend die Induktionsheizspule mit der Ansteuerspannung. Auf diese Weise erfolgt herkömmlich eine induktive Erwärmung des Kochgefäßbodens. Zur Temperaturmessung werden folgende Schritte durchgeführt: Erzeugen der Zwischenkreisspannung während vorgegebener Zeitabschnitte, insbesondere periodisch, mit einem konstanten Spannungspegel, wobei während der Zeitabschnitte bevorzugt die Zwischenkreisspannung unabhängig von der Netzwechselspannung erzeugt wird, Erzeugen der Ansteuerspannung während der vorgegebenen Zeitabschnitte derart, dass der Schwingkreis im Wesentlichen entdämpft mit seiner Eigenresonanzfrequenz schwingt, Messen mindestens eines Schwingungsparameters der Schwingung während der vorgegebenen Zeitabschnitte und Auswerten des mindestens einen gemessenen Schwingungsparameters zum Ermitteln der Temperatur. Da die Zwischenkreisspannung während der Temperaturmessung konstant gehalten wird, können Signalbeeinflussungen aufgrund einer veränderlichen Zwischenkreisspannung eliminiert werden, wodurch eine zuverlässige und störsichere Temperaturermittlung ermöglicht wird.

In einer Weiterbildung umfasst das Verfahren die Schritte: Bestimmen von Nulldurchgängen der Netzwechselspannung und Wählen der Zeitabschnitte im Bereich der Nulldurchgänge. Im Bereich der Nulldurchgänge bei einphasiger Netzwechselspannung nimmt die Zwischenkreisspannung üblicherweise stark ab. Der konstante Spannungspegel wird bevorzugt derart gewählt, dass er größer als der sich üblicherweise im Bereich der Nulldurchgänge einstellende Spannungspegel ist, sodass die Zwischenkreisspannung im Bereich der Nulldurchgänge auf den konstanten Spannungspegel geklemmt wird. Es herrschen dann im Bereich der Nulldurchgänge konstante Spannungsverhältnisse, die eine zuverlässige Temperaturmessung ermöglichen.

In einer Weiterbildung sind die Zeitabschnitte hinsichtlich der Nulldurchgänge im Wesentlichen zentriert, d.h. ein Zeitteilabschnitt der Zeitabschnitte vor dem Nulldurchgang weist in etwa dieselbe Dauer auf wie ein Zeitteilabschnitt der Zeitabschnitte nach dem Nulldurchgang.

In einer Weiterbildung weisen die Zeitabschnitte eine Dauer in einem Bereich von 50µs bis 1000µs, insbesondere 400µs bis 600µs, auf.

In einer Weiterbildung umfasst der mindestens eine Schwingungsparameter die Eigenresonanzfrequenz, eine Amplitude einer Schwingkreisspannung, beispielsweise eine Spannung über der Induktionsheizspule, eine Amplitude eines Schwingkreisstroms und/oder eine Phasenverschiebung zwischen der Schwingkreisspannung und dem Schwingkreisstrom.

In einer Weiterbildung wird die Zwischenkreisspannung während der Zeitabschnitte mit einem Pegel in einem Bereich von 10V bis 50V, insbesondere 15V bis 25V, erzeugt.

In einer Weiterbildung wird/werden zur Einstellung einer durch die Induktionsheizspule abzugebenden Heizleistung an Zeitpunkten außerhalb der Zeitabschnitte eine Frequenz der Ansteuerspannung und/oder ein Tastverhältnis der Ansteuerspannung verändert.

In einer Weiterbildung umfasst das Verfahren folgende weiteren Schritte: Messen eines Stromverlaufs durch die Induktionsheizspule und/oder eines Spannungsverlaufs an der Induktionsheizspule und Erzeugen der Ansteuerspannung synchron zu dem gemessenen Stromverlauf bzw. dem gemessenen Spannungsverlauf derart, dass der Schwingkreis in den Zeitabschnitten im Wesentlichen entdämpft mit seiner Eigenresonanzfrequenz schwingt.

In einer Weiterbildung umfasst das Verfahren folgende weiteren Schritte: Erzeugen der Ansteuerspannung mittels einer Halbbrückenschaltung umfassend zwei IGB-Transistoren, wobei die IGB-Transistoren mit einem Steuersignal angesteuert werden, Erzeugen eines Leistungseinstellsignals in Abhängigkeit von einer abzugebenden Heizleistung, Erzeugen eines Entdämpfungssignals in Abhängigkeit von dem gemessenen Stromverlauf bzw. dem gemessenen Spannungsverlauf und Auswählen des Leistungseinstellsignals als das Steuersignal an Zeitpunkten außerhalb der Zeitabschnitte und Auswählen des Entdämpfungssignals als das Steuersignal an Zeitpunkten in den Zeitabschnitten.

In einer Weiterbildung wird das Steuersignal an den Rändern der Zeitabschnitte durch logisches Verknüpfen des Leistungseinstellsignals und des Entdämpfungssignals erzeugt. Dies synchronisiert das Leistungseinstellsignal und das Entdämpfungssignal, wodurch Schaltspitzen an den Zeitabschnittsrändern vermieden werden.

Die erfindungsgemäße Induktionsheizeinrichtung ist dazu ausgebildet, das oben genannte Verfahren durchzuführen. Die Induktionsheizeinrichtung umfasst einen Frequenzumrichter, der dazu ausgebildet ist, aus einer Zwischenkreisspannung, die zumindest zeitweise in Abhängigkeit von einer Netzwechselspannung erzeugt ist, eine hochfrequente Ansteuerspannung zu erzeugen, einen Schwingkreis mit einer Induktionsheizspule, wobei der Schwingkreis mit der Ansteuerspannung beaufschlagt ist, und eine Temperaturerfassungseinrichtung, die dazu ausgebildet ist, eine Temperatur eines mittels der Induktionsheizspule erwärmten Kochgefäßbodens zu ermitteln. Weiter ist eine Hilfsspannungsquelle vorgesehen, die dazu ausgebildet ist, die Zwischenkreisspannung während vorgegebener Zeitabschnitte mit einem konstanten Pegel zu erzeugen. Der Frequenzumrichter ist dazu ausgebildet, die Ansteuerspannung während der Zeitabschnitte derart zu erzeugen, dass der Schwingkreis im Wesentlichen entdämpft mit seiner Eigenresonanzfrequenz schwingt. Die Temperaturerfassungseinrichtung ist dazu ausgebildet, mindestens einen Schwingungsparameter der Schwingung während der Zeitabschnitte zu messen und den mindestens einen gemessenen Schwingungsparameter zum Ermitteln der Temperatur auszuwerten.

In einer Weiterbildung sind ein Nulldurchgangsdetektor, der dazu ausgebildet ist, Nulldurchgänge der Netzwechselspannung zu bestimmen, und eine Steuereinrichtung vorgesehen, welche dazu ausgebildet ist, die Zeitabschnitte im Bereich der Nulldurchgänge zu wählen.

In einer Weiterbildung ist die Hilfsspannungsquelle dazu ausgebildet, eine Hilfsspannung mit einem Pegel in einem Bereich von 10V bis 50V, insbesondere 15V bis 25V, zu erzeugen.

In einer Weiterbildung umfasst die Induktionsheizeinrichtung weiter Messmittel, die dazu ausgebildet sind, einen Stromverlauf durch die Induktionsheizspule und/oder einen Spannungsverlauf an der Induktionsheizspule zu messen, wobei der Frequenzumrichter dazu ausgebildet ist, die Ansteuerspannung synchron zu dem gemessenen Stromverlauf bzw. dem gemessenen Spannungsverlauf derart zu erzeugen, dass der Schwingkreis während der Zeitabschnitte im wesentlichen entdämpft mit seiner Eigenresonanzfrequenz schwingt.

In einer Weiterbildung umfasst die Induktionsheizeinrichtung weiter eine Halbbrückenschaltung mit zwei IGB-Transistoren, die mit einem Steuersignal angesteuert sind, wobei der Frequenzumrichter dazu ausgebildet ist, ein Leistungseinstellsignal in Abhängigkeit von einer abzugebenden Heizleistung und ein Entdämpfungssignal in Abhängigkeit von dem gemessenen Stromverlauf bzw. dem gemessenen Spannungsverlauf zu erzeugen. Ein Auswahlmittel der Induktionsheizeinrichtung bzw. des Frequenzumrichters ist dazu ausgebildet, das Leistungseinstellsignal als das Steuersignal an Zeitpunkten außerhalb der Zeitabschnitte und das Entdämpfungssignal als das Steuersignal an Zeitpunkten während der Zeitabschnitte auszuwählen.

In einer Weiterbildung ist eine Gate-Treiberschaltung für die IGB-Transistoren vorgesehen, wobei die Hilfsspannungsquelle dazu ausgebildet ist, die Gate-Treiberschaltung mit einer Versorgungsspannung zu versorgen. Alternativ kann eine eigene Versorgungsspannungseinrichtung zur Versorgung der Gate-Treiberschaltung mit einer Versorgungsspannung vorgesehen sein, wobei diese zusätzlich die Hilfsspannungsquelle bildet.

Die Erfindung wird nachfolgend unter Bezugnahme auf die Zeichnungen beschrieben, die bevorzugte Ausführungsformen der Erfindung darstellen. Hierbei zeigt schematisch:
- Fig. 1: ein Blockdiagramm einer ersten Ausführungsform einer erfindungsgemäßen Induktionsheizeinrichtung,
- Fig. 2: einen zeitlichen Verlauf einer Zwischenkreisspannung der in Fig. 1 gezeigten Induktionsheizeinrichtung,
- Fig. 3: ein Oszillogramm verschiedener Signale der in Fig. 1 gezeigten Induktionsheizeinrichtung und
- Fig. 4: ein Blockdiagramm einer weiteren Ausführungsform einer erfindungsgemäßen Induktionsheizeinrichtung.

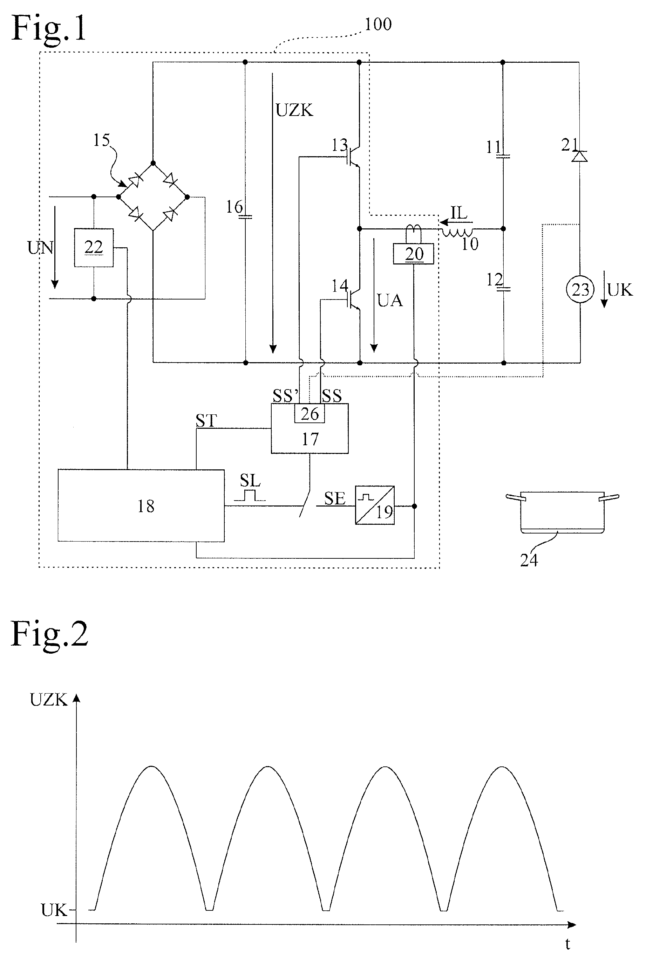

Fig. 1 zeigt ein Blockdiagramm einer ersten Ausführungsform einer erfindungsgemäßen Induktionsheizeinrichtung.

Die Induktionsheizeinrichtung umfasst einen Frequenzumrichter 100, der dazu ausgebildet ist, aus einer Zwischenkreisspannung UZK, die in Abhängigkeit von einer Netzwechselspannung UN und in Abhängigkeit von einer mittels einer Hilfsspannungsquelle 23 erzeugten Hilfsspannung UK erzeugt wird, eine hochfrequente Ansteuerspannung UA zur Ansteuerung eines Schwingkreises zu erzeugen.

Der Frequenzumrichter 100 umfasst hierzu einen herkömmlichen Vollbrückengleichrichter 15 zur Gleichrichtung der Netzwechselspannung UN. Zur Vor-Filterung eines Frequenzumrichterstroms ist ein Zwischenkreiskondensator 16 vorgesehen, an dem die Zwischenkreisspannung UZK ansteht. Die Hilfsspannungsquelle 23 ist über eine Entkopplungsdiode 21 mit dem Ausgang des Vollbrückengleichrichters 15 gekoppelt.

Wenn bei entsprechender Leistungsabgabe der Induktionsheizeinrichtung der Zwischenkreiskondensator 16 bei abnehmender Netzspannung UN entladen wird, nimmt die Zwischenkreisspannung UZK entlang der Netzspannung UN so lange ab, bis sie kleiner als die Spannung UK abzüglich einer Schwellenspannung der Diode 21 ist. Eine weitere Entladung des Zwischenkreiskondensators 16 wird anschließend durch die Hilfsspannungsquelle 23 in Verbindung mit der Diode 21 verhindert, d.h. die Zwischenkreisspannung UZK wird nach unten auf die Hilfsspannung UK geklemmt. Dieser Zusammenhang ist in Fig. 2 als Verlauf der Zwischenkreisspannung UZK über der Zeit t dargestellt. Die Hilfsspannung UK beträgt typisch ca. 20V.

Der Frequenzumrichter 100 umfasst weiter eine Halbbrückenschaltung mit zwei IGB-Transistoren 13 und 14, die in Serie zwischen Ausgänge des Vollbrückengleichrichters 15 eingeschleift und mit einem Steuersignal SS bzw. SS' angesteuert sind. Die Steuersignale SS und SS' weisen komplementäre Pegel auf.

Die mittels der IGB-Transistoren 13 und 14 erzeugte, hochfrequente Ansteuerspannung UA dient zur Ansteuerung des Schwingkreises, der eine Induktionsheizspule 10 und zwei Kondensatoren 11 und 12 umfasst. Die Kondensatoren 11 und 12 sind in Serie zwischen Ausgänge des Vollbrückengleichrichters 15 eingeschleift. Ein Verbindungsknoten der Kondensatoren 11 und 12 ist mit einem Anschluss der Induktionsheizspule 10 elektrisch verbunden. Der andere Anschluss der Induktionsheizspule 10 ist mit einem Verbindungsknoten der beiden IGB-Transistoren 13 und 14 elektrisch verbunden.

Eine Gate-Treiberschaltung 26 der IGB-Transistoren 13 und 14 wird optional mittels der Hilfsspannungsquelle 23 gespeist bzw. mit einer Versorgungsspannung versorgt. Die Gate-Treiberschaltung 26 erzeugt die Steuersignale SS bzw. SS' für die Gate-Anschlüsse der IGB-Transistoren 13 und 14 mit einem geeigneten Spannungspegel.

Der Frequenzumrichter umfasst weiter einen Nulldurchgangsdetektor 22, der dazu ausgebildet ist, Nulldurchgänge, einen Betrag und/oder eine Phasenlage der Netzwechselspannung UN zu bestimmen, einen digitalen Signalprozessor 18, der mit dem Nulldurchgangsdetektor 22 gekoppelt ist und der ein Leistungseinstellsignal SL in Form einer Rechteckspannung mit variablem Tastverhältnis in Abhängigkeit von einer abzugebenden Heizleistung erzeugt, ein Messmittel in Form eines Stromsensors 20, der einen Stromverlauf durch die Induktionsheizspule 10 misst, einen mit dem Stromsensor 20 gekoppelten Impulsformer 19, der aus einem mittels des Stromsensors 20 erzeugten Stromsignal ein Entdämpfungssignal SE erzeugt, und ein Auswahlmittel 17, das dazu ausgebildet ist, in Abhängigkeit von einem Auswahlsignal ST, das durch den Signalprozessor 18 erzeugt wird, aus dem Leisungseinstellsignal SL die Steuersignale SS und SS' und/oder aus dem Entdämpfungssignal SE die Steuersignal SS und SS' zu erzeugen. Falls die Steuersignale SS und SS' identische Pegel aufweisen, erschöpft sich das Erzeugen in einer Auswahl der Signale SL bzw. SE, andernfalls wird eines der Signale SS bzw. SS' durch simple Auswahl und das andere der Signale SS bzw. SS' durch Bilden des Komplements des ausgewählten Signals SL bzw. SE erzeugt.

Der Signalprozessor 18 sowie der Stromsensor 20 bilden eine bzw. sind Teil einer Temperaturerfassungseinrichtung, die dazu ausgebildet ist, eine Temperatur eines mittels der Induktionsheizspule 10 erwärmten Kochgefäßbodens 24 zu ermitteln.

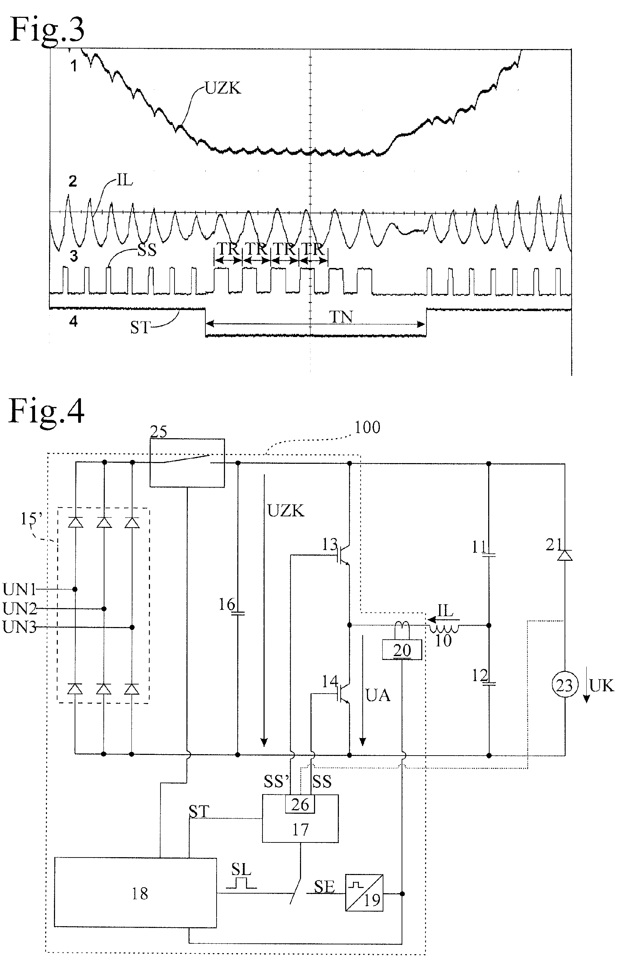

Das entsprechende Betriebs- und Auswerteverfahren wird nachfolgend unter Bezugnahme auf Fig. 3 detailliert beschrieben, wobei Fig. 3 ein Oszillogramm verschiedener Signale der in Fig. 1 gezeigten Induktionsheizeinrichtung zeigt.

In Fig. 3 sind zeitliche Verläufe der Zwischenkreisspannung UZK, eines Schwingkreisstroms bzw. eines Stroms IL durch die Induktionsheizspule 10 und des Auswahlsignals ST exemplarisch für einen Zeitabschnitt TN von mehreren gleichartigen Zeitabschnitten dargestellt. Die dargestellten Verläufe wiederholen sich periodisch mit der Netzwechselspannung UN.

Der Frequenzumrichter 100 erzeugt das rechteckförmige Leistungseinstellsignal SL herkömmlich in Abhängigkeit von einer abzugebenden Heizleistung, indem er beispielsweise eine Frequenz und/oder ein Tastverhältnis des Leistungseinstellsignals SL heizleistungsabhängig verändert.

Wenn das Auswahlsignal ST einen hohen Pegel aufweist, erzeugt das Auswahlmittel 17 die Steuersignale SS bzw. SS' derart, dass das Steuersignal SS gleich dem Leistungseinstellsignal SL und das Steuersignal SS' gleich dem komplementären Leistungseinstellsignal SL ist.

Wenn das Auswahlsignal ST einen niedrigen Pegel aufweist, erzeugt das Auswahlmittel 17 die Steuersignale SS bzw. SS' derart, dass das Steuersignal SS gleich dem Entdämpfungssignal SE und das Steuersignal SS' gleich dem komplementären Entdämpfungssignal SE ist.

Das Auswahlsignal ST wird durch den Signalprozessor 18 in Abhängigkeit von einem durch den Nulldurchgangsdetektor 22 gelieferten Signal erzeugt, welches beispielsweise einen Betrag und/oder eine Phasenlage der Netzwechselspannung UN abbildet. In einem Zeitabschnitt TN, der hinsichtlich des Nulldurchgangs der Netzwechselspannung UN zentriert ist und eine Dauer von ca. 500 µs aufweist, wird das Auswahlsignal ST mit einem niedrigen Pegel erzeugt. Außerhalb des Zeitabschnitts TN wird das Auswahlsignal ST mit einem hohen Pegel erzeugt.

Wahrend des Zeitabschnitts TN findet das Ermitteln der Temperatur des mittels der Induktionsheizspule 10 erwärmten Kochgefäßbodens 24 bei im Wesentlichen konstanter Zwischenkreisspannung UZK statt, wodurch Messwertverfälschungen aufgrund einer Veränderung der Zwischenkreisspannung vermieden werden.

Zur Temperaturmessung wird die Ansteuerspannung UA während des Zeitabschnitts TN derart erzeugt, dass der Schwingkreis im Wesentlichen entdämpft mit seiner Eigenresonanzfrequenz 1/TR schwingt. Der Signalprozessor 18 misst die Zeitdauern TR zwischen aufeinanderfolgenden Impulsen des durch den Stromsensor 20 gelieferten Signals und wertet die gemessenen Zeitdauern TR zur Temperaturermittlung aus.

Dieses Messprinzip macht von der Tatsache Gebrauch, dass ferromagnetische Eigenschaften des Topfbodens 24 temperaturabhängig sind. Aufgrund von magnetischen Kopplungseffekten mit dem Topfboden ist eine wirksame Induktivität der Induktionsheizspule 10 folglich ebenfalls temperaturabhängig, d.h. eine Resonanzfrequenz des Schwingkreises ändert sich in Abhängigkeit von der Topfbodentemperatur. Im Signalprozessor 18 kann beispielsweise eine empirisch ermittelte Kennlinie hinterlegt sein, die einer Resonanzfrequenz eine Topfbodentemperatur zuordnet, d.h. ein mathematischer Zusammenhang zwischen Topfbodentemperatur und Messwert kann analysiert und in Form einer Funktionsgleichung im Signalprozessor 18 hinterlegt werden. Für unterschiedliche Topfbodenmaterialien können spezifische Funktionsgleichungen hinterlegt und vor einer Messung durch einen Benutzer oder automatisch aktiviert werden, beispielsweise durch RFID Technik.

Zur exakten Temperaturermittlung können weitere Parameter berücksichtigt werden. So sind beispielsweise die elektrischen und magnetischen Eigenschaften der Induktionsheizspule 13 selbst in gewissem Maße temperaturabhängig. Ursache ist beispielsweise die Temperaturabhängigkeit der Permeabilität eines verwendeten Ferrits auf einer Unterseite der Induktionsheizspule und eines Widerstandes eines Spulendrahtes. Zur genauen Erfassung Topfbodentemperatur kann daher zusätzlich eine Kochstellentemperatur berücksichtigt werden. Hierzu kann an der Induktionsheizspule 10 ein zusätzlicher Temperatursensor vorgesehen sein.

Damit der Schwingkreis im Zeitabschnitt TN im Wesentlichen entdämpft schwingt, wird das Entdämpfungssignal SE in Abhängigkeit von dem gemessenen Stromverlauf erzeugt, wodurch die aus dem Entdämpfungssignal SE im Zeitabschnitt TN abgeleiteten Steuersignale SS und SS' phasenrichtig zur resonanten Schwingung erzeugt werden. Die Ansteuerspannung UA wird daher synchron zu dem gemessenen Stromverlauf derart erzeugt, dass der Schwingkreis im Wesentlichen entdämpft mit seiner Eigenresonanzfrequenz schwingt. Dies erhöht die Messgenauigkeit.

Nach einer Umschaltung in den Resonanzbetrieb im Zeitabschnitt TN können einige Schwingungen, beispielsweise 1 bis 5, abgewartet werden, um ein Einschwingen in einen stabilen Zustand zu gewährleisten. Erst dann wird die Periodendauer TR einer Schwingung gemessen.

Das Umschalten in den fremdgesteuerten Betrieb sollte zur Vermeidung von unerwünschten Geräuschen ebenfalls synchron, d.h. mit der gleichen Polarität der Steuersignal SS und SS' erfolgen, die am Umschaltzeitpunkt durch den Resonanzbetrieb vorgegeben ist. Mit anderen Worten können das Leistungseinstellsignal und das Entdämpfungssignal geeignet logisch verknüpft werden, um Spannungssprünge an den Rändern des Zeitabschnitts TN aufgrund von so genannten Glitches der Steuersignale SS und SS' zu vermeiden.

Alternativ kann auch eine Abschaltung des Frequenzumrichters für 1-3 Schwingperioden mit anschließendem Neustart erfolgen, wie dies in Fig. 3 gezeigt ist. Das erübrigt eine Synchronisierung und vermeidet ebenfalls unerwünschte Geräusche durch abrupte Stromänderungen in der Induktionsheizspule.

Zusammengefasst wird die Topfbodentemperatur durch Auswertung der temperaturabhängigen magnetischen und elektrischen Eigenschaften des Topfbodenmaterials ermittelt, die wiederum Schwingungsparameter des Schwingkreises beeinflussen, der die Induktionsheizspule 10 umfasst.

Die Parameter bzw. Messwerte werden zum Zeitpunkt geringer abgegebenen Leistung erfasst, indem diese in der Nähe des Nulldurchgangs der Netzwechselspannung gewonnen werden. Es wird folglich ein definierter Betriebspunkt vor der Erfassung eingestellt.

Die Betriebsspannung des Frequenzumrichters wird während der Messung konstant gehalten und der Frequenzumrichter wird zur Messung in den Eigenresonanzbetrieb umgeschaltet. Anschließend kann gewartet werden, bis sich der Resonanzbetrieb stabilisiert hat, bzw. gemessen werden, ob die Periodendauer konstant ist.

Das Umschalten vom gesteuerten in den Eigenresonanzbetrieb erfolgt phasensynchron. Im Eigenresonanzbetrieb erfolgt eine Entdämpfung, indem der Strom IL phasenrichtig zurückgekoppelt und das Ansteuersignal UA entsprechend phasenrichtig erzeugt wird.

Alternativ oder zusätzlich zur Messung der Periodendauer TR kann/können eine Amplitude des Stroms IL, eine Spannung an der Induktionsheizspule 10, ein Phasenwinkel zwischen den genannten Größen und/oder beliebige weitere Ströme und Spannungen des Schwingkreises gemessen werden, solange diese von der Temperatur des Topfbodens 24 abhängig sind.

Fig. 4 zeigt ein Blockdiagramm einer weiteren Ausführungsform einer erfindungsgemäßen Induktionsheizeinrichtung, die aus einem 3-phasigen Wechselstromnetz mit Phasen UN1, UN2 und UN3 versorgt ist. Gleiche Bezugszeichen wie in Fig. 1 bezeichnen identische Elemente.

Bei der in Fig. 4 gezeigten Ausführungsform wird die von einem Gleichrichter 15' erzeugte Versorgungsspannung periodisch, beispielsweise alle 1 bis 10 Sekunden, für kurze Zeit, beispielsweise 500µs, abgeschaltet. Während dieser Zeit kann das unter Bezugnahme auf die Figuren 1 bis 3 beschriebene Messverfahren entsprechend angewendet werden.

Die Abschaltung kann beispielsweise wie gezeigt zwischen Gleichrichter 15' und Zwischenkreiskondensator 16 mittels eines IGBT 25 vorgenommen werden. Falls die Induktionsheizeinrichtung eine Power Factor Correction(PFC)-Einheit aufweist, können Schalter der PFC-Einheit für die Spannungsabsenkung zur Messung verwendet werden. Es sind dann keine zusätzlichen Schalter erforderlich.

Bei den gezeigten Ausführungsformen umfasst der Frequenzumrichter eine Halbbrückenschaltung mit zwei IGB-Transistoren. Es versteht sich, dass die Erfindung auch im Kontext von Umrichtern mit einer Vollbrückenschaltung mit vier IGB-Transistoren oder im Kontext eines Eintransistorumrichters mit lediglich einem IGB-Transistor einsetzbar ist.

Die gezeigten Ausführungsformen ermöglichen eine zuverlässige und störsichere Ermittlung der Topfbodentemperatur bei geringem schaltungstechnischem Aufwand.

## Patentansprüche

1. Verfahren zum Ermitteln einer Temperatur eines mittels einer Induktionsheizspule (10) erwärmten Kochgefäßbodens (24), mit den Schritten:
- Erzeugen einer Zwischenkreisspannung (UZK) zumindest zeitweise in Abhängigkeit von einer Netzwechselspannung (UN),
- Erzeugen einer hochfrequenten Ansteuerspannung (UA) aus der Zwischenkreisspannung und
- Beaufschlagen eines Schwingkreises (10, 11, 12) umfassend die Induktionsheizspule mit der Ansteuerspannung,
**gekennzeichnet durch** die Schritte:
- Erzeugen der Zwischenkreisspannung während vorgegebener Zeitabschnitte (TN) mit einem konstanten Pegel (UK),
- Erzeugen der Ansteuerspannung während der vorgegebenen Zeitabschnitte derart, dass der Schwingkreis im Wesentlichen entdämpft mit seiner Eigenresonanzfrequenz (1/TR) schwingt,
- Messen mindestens eines Schwingungsparameters (TR) einer Schwingung des Schwingkreises (10, 11, 12) während der vorgegebenen Zeitabschnitte und
- Auswerten des mindestens einen gemessenen Schwingungsparameters zum Ermitteln der Temperatur.

2. Verfahren nach Anspruch 1, **gekennzeichnet durch** die Schritte:
- Bestimmen von Nulldurchgängen der Netzwechselspannung und
- Wählen der Zeitabschnitte im Bereich der Nulldurchgänge.

3. Verfahren nach Anspruch 2, **dadurch gekennzeichnet, dass** die Zeitabschnitte hinsichtlich der Nulldurchgänge zentriert sind.

4. Verfahren nach einem der vorhergehenden Ansprüche, **dadurch gekennzeichnet, dass** die Zeitabschnitte eine Dauer in einem Bereich von 50µs bis 1000µs, insbesondere 400µs bis 600µs, aufweisen.

5. Verfahren nach einem der vorhergehenden Ansprüche, **dadurch gekennzeichnet, dass** der mindestens eine Schwingungsparameter die Eigenresonanzfrequenz (1/TR), eine Amplitude einer Schwingkreisspannung, eine Amplitude eines Schwingkreisstroms (IL) und/oder eine Phasenverschiebung zwischen der Schwingkreisspannung und dem Schwingkreisstrom umfasst.

6. Verfahren nach einem der vorhergehenden Ansprüche, **dadurch gekennzeichnet, dass** die Zwischenkreisspannung während der Zeitabschnitte mit einem Pegel in einem Bereich von 10V bis 50V, insbesondere 15V bis 25V, erzeugt wird.

7. Verfahren nach einem der vorhergehenden Ansprüche, **dadurch gekennzeichnet, dass** zur Einstellung einer durch die Induktionsheizspule abzugebenden Heizleistung an Zeitpunkten außerhalb der Zeitabschnitte eine Frequenz der Ansteuerspannung und/oder ein Tastverhältnis der Ansteuerspannung verändert wird.

8. Verfahren nach einem der vorhergehenden Ansprüche, **gekennzeichnet durch** die Schritte:
- Messen eines Stromverlaufs (IL) **durch** die Induktionsheizspule und/oder eines Spannungsverlaufs an der Induktionsheizspule und
- Erzeugen der Ansteuerspannung synchron zu dem gemessenen Stromverlauf bzw. dem gemessenen Spannungsverlauf derart, dass der Schwingkreis während der Zeitabschnitte im Wesentlichen entdämpft mit seiner Eigenresonanzfrequenz schwingt.

9. Verfahren nach Anspruch 8, **gekennzeichnet durch** die Schritte:
- Erzeugen der Ansteuerspannung mittels einer Halbbrückenschaltung umfassend zwei IGB-Transistoren (13, 14), wobei die IGB-Transistoren mit einem Steuersignal (SS, SS') angesteuert werden,
- Erzeugen eines Leistungseinstellsignals (SL) in Abhängigkeit von einer abzugebenden Heizleistung,
- Erzeugen eines Entdämpfungssignals (SE) in Abhängigkeit von dem gemessenen Stromverlauf bzw. dem gemessenen Spannungsverlauf und
- Auswählen des Leistungseinstellsignals als das Steuersignal an Zeitpunkten außerhalb der Zeitabschnitte und Auswählen des Entdämpfungssignals als das Steuersignal an Zeitpunkten in den Zeitabschnitten.

10. Verfahren nach Anspruch 9, **dadurch gekennzeichnet, dass** das Steuersignal an den Rändern der Zeitabschnitte durch logisches Verknüpfen des Leistungseinstellsignals und des Entdämpfungssignals erzeugt wird.

11. Induktionsheizeinrichtung, die dazu ausgebildet ist, das Verfahren nach einem der Ansprüche 1 bis 10 durchzuführen, umfassend:
- einen Frequenzumrichter (100), der dazu ausgebildet ist, aus einer Zwischenkreisspannung (UZK), die zumindest zeitweise in Abhängigkeit von einer Netzwechselspannung (UN) erzeugt ist, eine hochfrequente Ansteuerspannung (UA) zu erzeugen,
- einen Schwingkreis (10, 11, 12) mit einer Induktionsheizspule (10), wobei der Schwingkreis mit der Ansteuerspannung beaufschlagt ist, und
- eine Temperaturerfassungseinrichtung (18, 20), die dazu ausgebildet ist, eine Temperatur eines mittels der Induktionsheizspule erwärmten Kochgefäßbodens (24) zu ermitteln, **gekennzeichnet durch**
- eine Hilfsspannungsquelle (23), die dazu ausgebildet ist, die Zwischenkreisspannung während vorgegebener Zeitabschnitte (TN) mit einem konstanten Pegel (UK) zu erzeugen,
- wobei der Frequenzumrichter dazu ausgebildet ist, die Ansteuerspannung während der Zeitabschnitte derart zu erzeugen, dass der Schwingkreis im Wesentlichen entdämpft mit seiner Eigenresonanzfrequenz schwingt, und
- die Temperaturerfassungseinrichtung dazu ausgebildet ist, mindestens einen Schwingungsparameter (TR) der Schwingung während der Zeitabschnitte zu messen und den mindestens einen gemessenen Schwingungsparameter zum Ermitteln der Temperatur auszuwerten.

12. Induktionsheizeinrichtung nach Anspruch 11, **gekennzeichnet durch**
- einen Nulldurchgangsdetektor (22), der dazu ausgebildet ist, Nulldurchgänge der Netzwechselspannung zu bestimmen, und
- eine Steuereinrichtung (18), welche dazu ausgebildet ist, die Zeitabschnitte im Bereich der Nulldurchgänge zu wählen.

13. Induktionsheizeinrichtung nach Anspruch 11 oder 12, **dadurch gekennzeichnet, dass** die Hilfsspannungsquelle dazu ausgebildet ist, eine Hilfsspannung mit einem Pegel in einem Bereich von 10V bis 50V, insbesondere 15V bis 25V, zu erzeugen.

14. Induktionsheizeinrichtung nach einem der Ansprüche 11 bis 13, **gekennzeichnet durch**
- Messmittel (20), die dazu ausgebildet sind, einen Stromverlauf durch die Induktionsheizspule und/oder einen Spannungsverlauf an der Induktionsheizspule zu messen,
- wobei der Frequenzumrichter dazu ausgebildet ist, die Ansteuerspannung synchron zu dem gemessenen Stromverlauf bzw. dem gemessenen Spannungsverlauf derart zu erzeugen, dass der Schwingkreis während der Zeitabschnitte im Wesentlichen entdämpft mit seiner Eigenresonanzfrequenz schwingt.

15. Induktionsheizeinrichtung nach einem der Ansprüche 11 bis 14, **gekennzeichnet durch**
- eine Halbbrückenschaltung umfassend zwei IGB-Transistoren (13, 14), die mit einem Steuersignal (SS, SS') angesteuert sind, wobei
- der Frequenzumrichter dazu ausgebildet ist, ein Leistungseinstellsignal (SL) in Abhängigkeit von einer abzugebenden Heizleistung und ein Entdämpfungssignal (SE) in Abhängigkeit von dem gemessenen Stromverlauf bzw. dem gemessenen Spannungsverlauf zu erzeugen, und
- ein Auswahlmittel (17), das dazu ausgebildet ist, das Leistungseinstellsignal als das Steuersignal an Zeitpunkten außerhalb der Zeitabschnitte und das Entdämpfungssignal als das Steuersignal an Zeitpunkten während der Zeitabschnitte auszuwählen.

## Claims

1. Method for determining a temperature of a cooking vessel base (24) which is heated by means of an induction heating coil (10), comprising the steps of:
- generating an intermediate circuit voltage (UZK) at least temporarily as a function of an AC mains voltage (UN),
- generating a high-frequency drive voltage (UA) from the intermediate circuit voltage, and
- applying the drive voltage to a resonant circuit (10, 11, 12) comprising the induction heating coil,
**characterized by** the steps of:
- generating the intermediate circuit voltage over predefined time periods (TN) at a constant level (UK),
- generating the drive voltage over the predefined time periods in such a way that the resonant circuit oscillates at its natural resonant frequency (1/TR) in a substantially deattenuated manner,
- measuring at least one oscillation parameter (TR) of an oscillation of the resonant circuit (10, 11, 12) over the predefined time periods, and
- evaluating the at least one measured oscillation parameter in order to determine the temperature.

2. Method according to claim 1, **characterized by** the steps of:
- determining zero crossings in the AC mains voltage, and
- selecting the time periods in the range of the zero crossings.

3. Method according to claim 2, **characterized in that** the time periods are centered with respect to the zero crossings.

4. Method according to any of the preceding claims, **characterized in that** the time periods have a duration in a range of from 50 µs to 1000 µs, in particular of from 400 µs to 600 µs.

5. Method according to any of the preceding claims, **characterized in that** the at least one oscillation parameter comprises the natural resonant frequency (1/TR), an amplitude of a resonant circuit voltage, an amplitude of a resonant circuit current (IL) and/or a phase shift between the resonant circuit voltage and the resonant circuit current.

6. Method according to any of the preceding claims, **characterized in that** the intermediate circuit voltage is generated over the time periods at a level in a range of from 10 V to 50 V, in particular of from 15 V to 25 V.

7. Method according to any of the preceding claims, **characterized in that** a frequency of the drive voltage and/or a pulse duty factor of the drive voltage are/is varied for the purpose of setting a heating power which is to be output by the induction heating coil, at times outside the time periods.

8. Method according to any of the preceding claims, **characterized by** the steps of:
- measuring a current profile (IL) through the induction heating coil and/or a voltage profile across the induction heating coil, and
- generating the drive voltage synchronously to the measured current profile or to the measured voltage profile in such a way that the resonant circuit oscillates at its natural resonant frequency in a substantially deattenuated manner over the time periods.

9. Method according to claim 8, **characterized by** the steps of:
- generating the drive voltage by means of a half-bridge circuit comprising two IGB transistors (13, 14), with the IGB transistors being driven by a control signal (SS, SS'),
- generating a power setting signal (SL) as a function of a heating power which is to be output,
- generating a deattenuation signal (SE) as a function of the measured current profile or the measured voltage profile, and
- selecting the power setting signal as the control signal at times outside the time periods, and selecting the deattenuation signal as the control signal at times within the time periods.

10. Method according to claim 9, **characterized in that** the control signal is generated at the edges of the time periods by logically combining the power setting signal and the deattenuation signal.

11. Induction heating device which is designed to carry out the method according to any of claims 1 to 10, comprising:
- a frequency converter (100) which is designed to generate a high-frequency drive voltage (UA) from an intermediate circuit voltage (UZK) which is generated at least temporarily as a function of an AC mains voltage (UN),
- a resonant circuit (10, 11, 12) having an induction heating coil (10), with the drive voltage being applied to the resonant circuit, and
- a temperature detection device (18, 20) which is designed to obtain a temperature of a cooking vessel base (24) which is heated by means of the induction heating coil,
**characterized by**
- an auxiliary voltage source (23) which is designed to generate the intermediate circuit voltage over predefined time periods (TN) at a constant level (UK),
- with the frequency converter being designed to generate the drive voltage over the time periods in such a way that the resonant circuit oscillates at its natural resonant frequency in a substantially deattenuated manner, and
- the temperature detection device being designed to measure at least one oscillation parameter (TR) of the oscillation over the time periods, and to evaluate the at least one measured oscillation parameter in order to determine the temperature.

12. Induction heating device according to claim 11, **characterized by**
- a zero crossing detector (22) which is designed to determine zero crossings of the AC mains voltage, and
- a control device (18) which is designed to select the time periods in the range of the zero crossings.

13. Induction heating device according to claim 11 or 12, **characterized in that** the auxiliary voltage source is designed to generate an auxiliary voltage at a level in a range of from 10 V to 50 V, in particular of from 15 V to 25 V.

14. Induction heating device according to any of claims 11 to 13, **characterized by**
- measurement means (20) which are designed to measure a current profile through the induction heating coil and/or a voltage profile across the induction heating coil,
- with the frequency converter being designed to generate the drive voltage in synchronism with the measured current profile or the measured voltage profile in such a way that the resonant circuit oscillates at its natural resonant frequency in a substantially deattenuated manner over the time periods.

15. Induction heating device according to any of claims 11 to 14, **characterized by**
- a half-bridge circuit comprising two IGB transistors (13, 14) which are driven by a control signal (SS, SS'), with
- the frequency converter being designed to generate a power setting signal (SL) as a function of a heating power which is to be output, and a deattenuation signal (SE) as a function of the measured current profile or the measured voltage profile, and
- a selection means (17) which is designed to select the power setting signal as the control signal at times outside the time periods, and to select the deattenuation signal as the control signal at times over the time periods.

## Revendications

1. Procédé de détermination d'une température d'un fond de récipient de cuisine (24) chauffé par une bobine d'induction (10), comprenant les étapes consistant à :
- générer une tension de circuit intermédiaire (UZK) au moins par instants en fonction d'une tension alternative du secteur (UN),
- générer une tension d'attaque à haute fréquence (UA) à partir de la tension de circuit intermédiaire, et
- appliquer la tension d'attaque à un circuit oscillant (10, 11, 12) comprenant la bobine d'induction, **caractérisé par** les étapes consistant à :
- générer la tension de circuit intermédiaire pendant des intervalles de temps prédéterminés (TN) avec un niveau constant (UK),
- générer la tension d'attaque pendant les intervalles de temps prédéterminés de manière à ce que le circuit oscillant oscille de manière sensiblement non amortie à sa fréquence de résonance propre (1/TR),
- mesurer au moins un paramètre d'oscillation (TR) d'une oscillation du circuit oscillant (10, 11, 12) pendant l'intervalle de temps prédéterminé, et
- analyser l'au moins un paramètre d'oscillation mesuré pour déterminer la température.

2. Procédé selon la revendication 1, **caractérisé par** les étapes consistant à :
- déterminer des passages à zéro de la tension alternative du secteur, et
- sélectionner les intervalles de temps dans la plage des passages à zéro.

3. Procédé selon la revendication 2, **caractérisé en ce que** les intervalles de temps sont centrés sur les passages à zéro.

4. Procédé selon l'une quelconque des revendications précédentes, **caractérisé en ce que** les intervalles de temps ont une durée se situant dans une plage de 50 µs à 1000 µs, notamment de 400 µs à 600 µs.

5. Procédé selon l'une quelconque des revendications précédentes, **caractérisé en ce que** l'au moins un paramètre d'oscillation comprend la fréquence de résonance propre (1/TR), une amplitude d'une tension de circuit oscillant, une amplitude d'un courant oscillant (IL) et/ou un déphasage entre la tension de circuit oscillant et le courant de circuit oscillant.

6. Procédé selon l'une quelconque des revendications précédentes, **caractérisé en ce que** la tension de circuit intermédiaire est générée pendant l'intervalle de temps avec un niveau se situant dans une plage de 10 V à 50 V, notamment de 15 V à 25 V.

7. Procédé selon l'une quelconque des revendications précédentes, **caractérisé en ce que**, pour régler une puissance de chauffage devant être délivrée par l'intermédiaire de la bobine d'induction à des instants extérieurs à l'intervalle de temps, une fréquence de la tension d'attaque et/ou un rapport cyclique de la tension d'attaque est modifié.

8. Procédé selon l'une quelconque des revendications précédentes, **caractérisé par** les étapes consistant à :
- mesurer une courbe de courant (IL) à travers la bobine d'induction et/ou une courbe de tension aux bornes de la bobine d'induction, et
- générer la tension d'attaque en synchronisme avec la courbe de courant mesurée ou la courbe de tension mesurée afin que le circuit oscillant oscille à sa fréquence de résonance propre de manière sensiblement non amortie pendant l'intervalle de temps.

9. Procédé selon la revendication 8, **caractérisé par** les étapes consistant à :
- générer la tension d'attaque au moyen d'un circuit en demi-pont comprenant deux transistors IGB (13, 14), dans lequel les transistors IGB sont attaqués par un signal de commande (SS, SS'),
- générer un signal de réglage de puissance (SL) en fonction d'une puissance de chauffage devant être délivrée,
- générer un signal de non-amortissement (SE) en fonction de la courbe de courant mesurée ou de la courbe de tension mesurée, et
- sélectionner le signal de réglage de puissance en tant que signal de commande à des instants extérieurs à l'intervalle de temps et sélectionner le signal de non-amortissement en tant que signal de commande aux instants intérieurs à l'intervalle de temps.

10. Procédé selon la revendication 9, **caractérisé en ce que** le signal de commande est généré sur les bords de l'intervalle de temps par une combinaison logique du signal de réglage de puissance et du signal de non-amortissement.

11. Dispositif de chauffage à induction conçu pour mettre en oeuvre le procédé selon l'une quelconque des revendications 1 à 10, comprenant :
- un convertisseur de fréquence (100) conçu pour générer une tension d'attaque à haute fréquence (UA) à partir d'une tension de circuit intermédiaire (UZK) qui est générée au moins par instants en fonction d'une tension alternative du secteur (UN),
- un circuit oscillant (10, 11, 12) comportant une bobine d'induction (10), dans lequel la tension d'attaque est appliquée au circuit oscillant, et
- un dispositif de détection de température (18, 20) conçu pour déterminer une température d'un fond de récipient de cuisine (24) chauffé par la bobine d'induction,
**caractérisé par**
- une source de tension auxiliaire (23) conçue pour générer la tension de circuit intermédiaire pendant des intervalles de temps prédéterminés (TN) avec un niveau constant (UK),
- dans lequel le convertisseur de fréquence est conçu pour générer la tension d'attaque pendant les intervalles de temps afin que le circuit oscillant oscille de manière sensiblement non amortie à sa fréquence de résonance propre, et
- le dispositif de détection de température est conçu pour mesurer au moins un paramètre d'oscillation (TR) de l'oscillation pendant les intervalles de temps et pour analyser l'au moins un paramètre d'oscillation mesuré afin de déterminer la température.

12. Dispositif de chauffage à induction selon la revendication 11, **caractérisé par** :
- un détecteur de passages à zéro (22) conçu pour déterminer des passages à zéro de la tension alternative du secteur, et
- un dispositif de commande (18) conçu pour sélectionner les intervalles de temps dans la plage des passages à zéro.

13. Dispositif de chauffage à induction selon la revendication 11 ou 12, **caractérisé en ce que** la source de tension auxiliaire est conçue pour générer une tension auxiliaire ayant un niveau se situant dans une plage de 10 V à 50 V, notamment de 15 V à 25 V.

14. Dispositif de chauffage à induction selon l'une quelconque des revendications 11 à 13, **caractérisé par** :
- des moyens de mesure (20) qui sont conçus pour mesurer une courbe de courant à travers la bobine d'induction et/ou une courbe de tension aux bornes de la bobine d'induction,
- dans lequel le convertisseur de fréquence est conçu pour générer la tension d'attaque en synchronisme avec la courbe de courant mesurée ou avec la courbe de tension mesurée afin que le circuit oscillant oscille pendant les intervalles de temps de manière sensiblement non amortie à sa fréquence de résonance propre.

15. Dispositif de chauffage à induction selon l'une quelconque des revendications 11 à 14, **caractérisé par** :
un circuit en demi-pont comprenant deux transistors IGB (13, 14) qui sont attaqués par un signal de commande (SS, SS'), dans lequel
- le convertisseur de fréquence est conçu pour générer un signal de réglage de puissance (SL) en fonction d'une puissance de chauffage devant être délivrée, et un signal de non-amortissement (SE) en fonction de la courbe de courant mesurée ou de la courbe tension mesurée, et
- un moyen de sélection (17) conçu pour sélectionner le signal de réglage de puissance en tant que signal de commande à des instants extérieurs à l'intervalle de temps et le signal de non-amortissement en tant que signal de commande aux instants intérieurs à l'intervalle de temps.
